# EUROPEAN PATENT APPLICATION

(11) **EP 4 531 180 A1**
(43) Date of publication of application: **02.04.2025**
(21) Application number: 23200304.6
(22) Date of filing: 28.09.2023
(51) Int. Cl.: H01M 50/24, H01M 50/282, H01M 50/358, H01M 50/375

(54) **BATTERY SYSTEM WITH IMPROVED THERMAL RUNAWAY HANDLING**

(71) Applicant: Samsung SDI Co., Ltd., Yongin-si, Gyeonggi-do 17084 (KR)
(72) Inventor: Suba, Balazs, 8020 Graz (AT); Kraberger, Gernot, 8010 Graz (AT); Hochgatterer, Nikolaus, 8041 Graz (AT)
(74) Representative: Gulde & Partner

(57) **Abstract**

The present disclosure refers to a battery system (100, 100'), including a housing (11) and at least one battery cell (12) accommodated within the housing (11), wherein the at least one battery cell (12) includes a venting side (13) with a venting exit (14), a housing cover (20) sealing the battery system (100), wherein the housing cover (20) includes an outer layer (22) and an inner layer (24), the inner layer (24) faces the venting side (13) and forms part of a venting channel (28) guiding a venting gas stream exhausted through the venting exit (14) away from the venting exit (14), wherein the outer layer (22) is coated on its outside surface with an anti-corrosion coating (26), wherein the outer layer (22) and the inner layer (24) are distanced from each other such that an air gap (30) is formed as a free space confined between the outer layer (22) and the inner layer (24).

## Description

### Field of the Disclosure

The present disclosure relates to a battery system which more securely handles a thermal runaway of one or more of its battery cells. Further, the present invention relates to a vehicle including such a battery system.

### Technological Background

Recently, vehicles for transportation of goods and peoples have been developed that use electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. A hybrid vehicle may include a combination of an electric motor and conventional combustion engine.

Generally, an electric-vehicle battery, (EVB, or traction battery) is a battery used to power the propulsion of battery electric vehicles, BEVs. Electric-vehicle batteries differ from starting, lighting, and ignition batteries in that they are designed to provide power for sustained periods of time. A rechargeable (or secondary) battery differs from a primary battery in that it is designed to be repeatedly charged and discharged, while the latter is designed to provide only an irreversible conversion of chemical to electrical energy. Low-capacity rechargeable batteries are used as power supplies for small electronic devices, such as cellular phones, notebook computers and camcorders, while high-capacity rechargeable batteries are used as power supplies for electric and hybrid vehicles and the like.

Generally, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case such as cylindrical or rectangular, may be selected based on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled to each other in series and/or in parallel so as to provide a high density, such as for motor driving of a hybrid vehicle. For example, the battery module may be formed by interconnecting the electrode terminals of the plurality of unit battery cells in an arrangement or configuration depending on a desired required amount of power and in order to realize a high-power rechargeable battery.

Battery modules can be constructed in either a block design or in a modular design. In the block design each battery is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected in series for providing a desired voltage. The battery modules may include submodules with a plurality of stacked battery cells and each stack includes cells connected in parallel that are, in turn, connected in series (*XpYs*) or cells connected in series that are, in turn, connected in parallel (*XsYp*).

A battery pack is a set of any number of (usually identical) battery modules. The battery modules may be configured in a series, parallel or a mixture of both to deliver the desired voltage, capacity, and/or power density. Components of a battery pack include the individual battery modules, and the interconnects, which provide electrical conductivity between the battery modules.

A battery system may also include a battery management system (BMS), which is any suitable electronic system that is configured to manage the rechargeable battery cell, battery module, and battery pack, such as by protecting the batteries from operating outside their safe operating area, monitoring their states, calculating secondary data, reporting that data, controlling its environment, authenticating it and/or balancing it. For example, the BMS may monitor the state of the battery cell as represented by voltage (e.g., a total voltage of the battery pack or battery modules, and/or voltages of individual battery cells), temperature (e.g., an average temperature of the battery pack or battery modules, coolant intake temperature, coolant output temperature, or temperatures of individual battery cells), coolant flow (e.g., flow rate and/or cooling liquid pressure), and current. Additionally, the BMS may calculate values based on the above parameters, such as minimum and maximum cell voltage, state of charge (SOC) or depth of discharge (DOD) to indicate the charge level of the battery cell, state of health (SOH; a variously-defined measurement of the remaining capacity of the battery cell as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. In other examples, the BMS may be also distributed, with a BMS board is installed at each cell, with just a single communication cable between the battery cell and a controller. In yet other examples, the BMS may have a modular construction including a few controllers, each handling a certain number of cells, while communicating between the controllers. Centralized BMSs are most economical, but are least expandable, and are plagued by a multitude of wires. Distributed BMSs are the most expensive, but are simplest to install, and offer the cleanest assembly. Modular BMSs provide a compromise of the features and problems of the other two topologies.

The BMS may protect the battery pack from operating outside its safe operating area. Operation outside the safe operating area may be indicated by over-current, over-voltage (during charging), over-temperature, under-temperature, over-pressure, and ground fault or leakage current detection. The BMS may prevent the battery from operating outside its safe operating parameter by including an internal switch (e.g., a relay or solid-state device) that opens if the battery is operated outside its safe operating parameters, requesting the devices to which the battery is connected to reduce or even terminate using the battery, and actively controlling the environment, such as through heaters, fans, air conditioning or liquid cooling.

To provide thermal control of the battery pack a thermal management system is required to safely use the at least one battery module by efficiently emitting, discharging, and/or dissipating heat generated from its rechargeable batteries. If the heat emission, discharge, and/or dissipation is not sufficiently performed, temperature deviations may occur between respective battery cells, such that the at least one battery module may no longer generate a desired (or designed) amount of power. In addition, an increase of the internal temperature can lead to abnormal reactions occurring therein and thus charging and discharging performance of the rechargeable battery deteriorates and the lifespan of the rechargeable battery is shortened. Thus, cell cooling for effectively dissipating heat from the battery cells is required.

Exothermic decomposition of cell components may lead to a so-called thermal runaway. Generally, thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, thermal runaway is associated with strong exothermic reactions that are accelerated by temperature rise. These exothermic reactions include combustion of flammable gas compositions within the housing. For example, when a cell is heated above a critical temperature (for example, above 150°C) the cell can transition into a thermal runaway. The initial heating may be caused by a local failure, such as a cell internal short circuit, heating from a defective electrical contact, a short circuit to a neighboring cell, etc. During the thermal runaway, a failed battery cell, (e. g., a battery cell that has a local failure) may reach a temperature exceeding 700°C. Further, large quantities of hot gas are ejected from inside of the failed battery cell through the venting opening of a cell housing into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack.

When a battery cell is heated above a critical temperature (for example, above 150°C) the battery cell can transition into a thermal runaway. Generally, temperatures outside of the safe region on either the low or high side may lead to irreversible damage to the battery cell and therefore may possible trigger thermal runaway. Thermal runaway may also occur due to an internal or external short circuit of the battery cell or poor battery maintenance. For example, overcharging or rapid charging may lead to thermal runaway.

During thermal runaway, the failed battery cell may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack. In the worst case, the high temperatures lead to the process spreading to neighboring cells and fire in the battery pack. At this stage, the fire is hardly to extinguish.

The BMS is critical to the safe operation and optimal performance of rechargeable battery cells and helps minimize the possibility of thermal runaway. For example, if the BMS detects that the temperature is too hot, it can regulate the temperature by controlling cooling fans. Alternatively, if the battery cell cannot be cooled and safe conditions restored, the BMS may shut down necessary battery cells to protect the entire system.

A state-of-the-art venting concept for a battery is to let the hot venting gas stream of a battery cell in thermal runaway condition exit the battery cell(s) and expand into the housing and escape through a housing venting valve to the outside (the environment of the housing). The venting gas stream thereby heats up the housing, for example, parts of the housing opposite the venting exits of the battery cells, as e.g. a housing cover. This may compromise an anti-corrosion coating applied to an outside surface of the housing cover and may thus expose the housing cover to corrosion.

It is thus an object of the present invention to overcome or reduce at least some of the drawbacks of the prior art and to provide to provide a battery system which more securely handles a thermal runaway of one or more of its battery cells without damaging components of the battery system.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery system is provided, including a housing and at least one battery cell accommodated within the housing, wherein the at least one battery cell includes a venting side with a venting exit, a housing cover sealing the battery system, wherein the housing cover includes an outer layer and an inner layer, the inner layer faces the venting side and forms part of a venting channel guiding a venting gas stream exhausted through the venting exit away from the venting exit, wherein the outer layer is coated on its outside surface with an anti-corrosion coating, wherein the outer layer and the inner layer are distanced from each other such that an air gap is formed as a free space confined between the outer layer and the inner layer.

According to another aspect of the present disclosure, the inner layer is made by a plate attached to the inside surface of the outer layer of the housing cover.

According to another aspect of the present disclosure, the air gap extends along a first length and the venting side along a second length, the first length being smaller than the second length.

According to another aspect of the present disclosure, the anti-corrosion coating is a zinc-nickel coating.

According to another aspect of the present disclosure, both the outer layer and the inner layer are of steel or a steel alloy.

According to another aspect of the present disclosure, the inner layer includes a guide projection formed as a protrusion in the inner layer and projecting towards the venting exit into the venting channel for guiding the venting gas stream exhausted through the venting exit into the venting channel. According to respective aspect of the present disclosure, the guide projection is a gas splitting projection having a tapered shape with a tip facing the venting exit and adapted to split the venting gas stream such that the venting gas stream is deflected to opposite sides of the venting channel.

Yet another aspect of the present disclosure refers to the battery system including a plurality of battery cells arranged inside the housing, wherein the housing cover includes a plurality of steel plates attached to the inside surface of the outer layer of the housing cover, each of the steel plates facing the venting side opposite the venting exit of one of the battery cells, wherein an air gap is formed as a free space confined between each of the steel plates and the outer layer of the housing cover.

Yet another aspect of the present disclosure refers to an electric vehicle including the battery system according to any one of the preceding aspects.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates schematically a sectional view of a battery system according to a first embodiment of the invention.
- Fig. 2: illustrates schematically a perspective view of a housing cover of Fig. 1.
- Fig. 3: illustrates schematically a sectional view of a battery system according to a second embodiment of the invention.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/-5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided including a housing and at least one battery cell accommodated within the housing. The battery system may include a plurality of battery cells accommodated within the housing, the battery cells forming a battery pack. The battery cells may be interconnected via busbars contacting the respective electrode terminals of the battery cells to form one or more battery modules. The battery cells may e.g. be prismatic or cylindrical cells.

The one or more battery cells include venting exits at a venting side of the battery cells, which is, for example, the terminal side of the battery cells, the venting exits allowing a venting gas stream to escape the battery cells during a thermal runaway. Venting valves may be provided at the venting exits. A cover plate may cover the venting side, the cover plate including a through-hole arranged at the venting exit for letting the venting gas stream pass through the through-hole.

The battery system further includes a housing cover. The housing cover may be considered part of the housing. The housing cover may be a cover plate, for example an upper cover plate arranged at an upper side/top side of the battery system or a lower cover plate arranged at a lower side/bottom side of the battery system. The housing cover may be attached to a base of the housing after the battery cells have been inserted into the housing base. The housing cover seals, i.e. closes, the housing to the outside, i.e. the environment of the battery system. The housing cover, in combination with the further parts of the housing, i.e. the housing base, may seal the inside of the housing towards the outside of the housing such that a venting gas stream exhausted by one or more battery cells during a thermal runaway may escape the housing and thus the battery system only at passages provided for this purpose, e.g. at a venting valve arranged in a housing wall of the housing. The housing cover may seal the battery pack to the outside in an airtight manner.

The housing cover includes an outer layer and an inner layer. The inner layer and/or the outer layer may be made of steel. The outer layer may delimit the housing cover to the outside of the housing and the inner layer may delimit the housing cover to the inside of the housing. In other words, the inner layer of the housing cover faces towards the inside of the housing. For example, the inner layer faces the venting side of the battery cell. The inner layer is arranged opposite the venting exit of the battery cell such that a venting gas stream exiting the venting exit of the battery cell flows against the inner layer and is deflected by the inner layer to the sides of the housing. The venting gas stream thus flows along the venting channel which is formed at least in part by the inner layer. The inner layer may delimit the venting channel to one side. The venting channel may be delimited at the opposite side by the venting side of the battery cell or by the above-mentioned cover plate, if present. Thus, the venting channel may be formed by the inner layer and the venting side/cover plate. The venting gas stream exhausted through the venting exit into the venting channel during a thermal runaway is deflected by the inner layer and guided along the venting channel away from the venting exit. As the venting gas stream flows from the venting exit towards and against the inner layer of the housing cover, heat is transferred from the venting gas stream to the inner layer thus cooling down the venting gas stream.

The outer layer of the housing cover is coated on its outside surface with an anti-corrosion coating. The outside surface is the surface of the outer layer facing to the outside, i.e. the environment of the housing/battery system, and thus away from the inner layer of the housing cover. The anti-corrosion coating prevents corrosion of the outer layer and thus of the housing cover from outside sources. The anti-corrosion coating may protect the housing cover from damage from moisture that may come into contact with the housing cover from the outside of the housing/battery system. Such an anti-corrosion coating may be damaged if exposed to high temperatures as mentioned above. That is, if the outer layer of the housing cover comes into contact with the venting gas stream, the outer layer might heat up so much that the anti-corrosion coating may be compromised. This may result in the housing cover corroding which may in turn lead to damage of the internal components of the battery system due to moisture entering the housing and/or to leakage of e.g. venting gases to the outside.

Therefore, according to the invention, the inner layer is provided to protect the outer layer from the venting gas stream. An air gap is formed between the outer layer and the inner layer. The inner layer and the outer layer are distanced from each other such that the air gap is formed as a free space confined between the inner layer and the outer layer. In other words, there is the free space confined between the reflection plate and the housing cover, the free space being filled with air. The air gap is formed at least at a part of the housing cover that is arranged opposite the venting exit. The housing cover according to the invention thus includes a double-layer structure with the air gap in between.

When the venting gas stream exiting the venting exit of the battery cell flows against the inner layer and transfers heat to the inner layer, the air gap on the other side of the inner layer serves as thermal insulation hindering a heat transfer from the inner layer to the outer layer of the housing cover. This prevents excessive heat up of the outer layer of the housing cover and thus prevents damage to the anti-corrosion coating of the outer layer. This improves the life expectancy of the coating and thus of the battery system.

According to an embodiment, the inner layer is formed by a plate attached to the inside surface of the outer layer of the housing cover. The inside surface of the outer layer is the surface of the outer layer facing the inside of the housing. The plate is distanced from the outer layer so as to form the air gap in between the plate and the outer layer as explained above. The plate may be a steel plate. The plate may be welded to the inside surface of the outer layer of the housing cover. If the battery system includes a plurality of battery cells, such a plate may be provided for each of the battery cells. That is, for every battery cell such a plate may be attached to the inside surface of the outer layer of the housing cover, each plate respectively facing the venting side opposite the venting exit of one of the battery cells. Such a plate allows for a constructively simple provision of the inner layer and the air gap and thus of the inventive double-layer structure. Such a plate may be attached to existing housing covers that are already used today for battery systems. Such a plate may even be retrofitted to known battery systems.

According to an embodiment, the air gap extends along a first length and the venting side along a second length, the first length being smaller than the second length. Extending along the length means an extension along a same direction or axis. Extending along the length means for example extending along a longitudinal axis of the battery cell. The length may e.g. be a direction or axis along which the venting gas mainly streams. This may be achieved, for example, in that the inner layer extends not along the complete length of the venting side of the battery cell but only along a part of the venting side/battery cells. In other words, the inner layer may not cover the venting side/battery cell completely but only partly in the area opposite of the venting exit. The venting gas stream may thus, after having been deflected by the inner layer as explained above, come in contact with the inner surface of the outer layer. The first length is chosen such that the venting gas stream has had sufficient time to transfer heat to the inner layer and thus to sufficiently cool down so as not to damage the outer layer and the coating thereon when coming into contact with the outer layer. Thus, the inner surface of the outer layer may be exposed to the venting gas at a distance sufficiently far from the venting exit for the venting gas stream having cooled down enough not to heat up the outer layer so much that it would lead to damage to the coating on the outer layer. The inner layer may be formed by the above-mentioned plate in this embodiment. According to this embodiment, the air gap is provided only where it is needed which is constructively simpler than providing an air gap along the entire inner surface of the outer layer.

According to an embodiment, the anti-corrosion coating is a zinc-nickel coating. Such a coating is well-suited to prevent corrosion of the outer layer of the housing cover but is also sensitive to temperature. Due to the inventive double-layer structure of the housing cover with the air gap in between, thermal damage from the venting gas stream to the coating may nevertheless be prevented or at least significantly reduced.

According to an embodiment, both the outer layer and the inner layer are of steel or a steel alloy. Both the outer layer and the inner layer may be of the same steel or steel alloy. The layers may both be a made of and/or consist of or mainly include the respective steel or steel alloy. This allows for the housing cover to be rigid and resilient.

According to an embodiment, the inner layer includes a guide projection formed as a protrusion in the inner layer and projecting towards the venting exit into the venting channel for guiding the venting gas stream exhausted through the venting exit into the venting channel. According to a respective embodiment, the guide projection is a gas splitting projection having a tapered shape with a tip facing the venting exit and adapted to split the venting gas stream such that the venting gas stream is deflected to opposite sides of the venting channel. Thus, in this embodiment, the inner layer of the housing cover includes a guide projection, i.e. a projecting element for guiding the venting gas stream. The guide projection may be an integrated guide projection, i.e. it is an integral part of the inner layer of the housing cover. In other words, the inner layer may form the guide projection. In other words, the guide projection may be a protrusion in the inner layer. The guide projection projects towards the venting exit of the at least one battery cell and thus projects into the venting channel. The guide projection is adapted to guide the venting gas stream exhausted through the venting exit of the battery cell during a thermal runaway event away from the venting exit. The guide projection may be adapted to split the venting gas stream in two substreams and direct these substreams in opposite directions away from one another. The guide projection leads the venting gas stream away from the venting exit and from the battery cell along the venting channel. This allows for the venting gas stream to be transported away quickly and reliably. Also, the guide projection may enlarge the surface area of the inner layer so that the venting gas stream may transfer heat well to the inner layer. The venting gas stream is cooled down well in this embodiment. The guide projection may also reduce the pressure drop occurring during exhaust of the venting gas stream by an aerodynamically efficient design and may serve as a collector for molten particles which are carried with the venting gas stream. It is advantageous for this embodiment, if the inner layer and thus also the guide projection is formed by the above-mentioned (steel) plate as this simplifies construction.

According to an embodiment, the battery system includes a plurality of battery cells arranged inside the housing, wherein the housing cover includes a plurality of plates attached to the inside surface of the outer layer of the housing cover, each of the plates facing the venting side opposite the venting exit of one of the battery cells, wherein an air gap is formed as a free space confined between each of the steel plates and the outer layer of the housing cover. That is, the inner layers formed by the respective plates are distanced from the outer layer such that air gaps are formed as a free space confined between the respective plates and the outer layer. The plates are preferably steel plates. In this embodiment, some or all of the battery cells of the battery system may be provided with the inventive double-layer structure including an air gap. Each of the battery cells may have its own plate and thus its own double-layer structure including an air gap. The plates may e.g. be welded to the outer layer of the housing cover. A known housing cover may easily be retrofitted with such plates and thus the coating on the outer surface of the outer layer of the housing cover may be protected.

The invention also pertains to an electric vehicle including a battery system according to the invention.

### Specific Embodiments

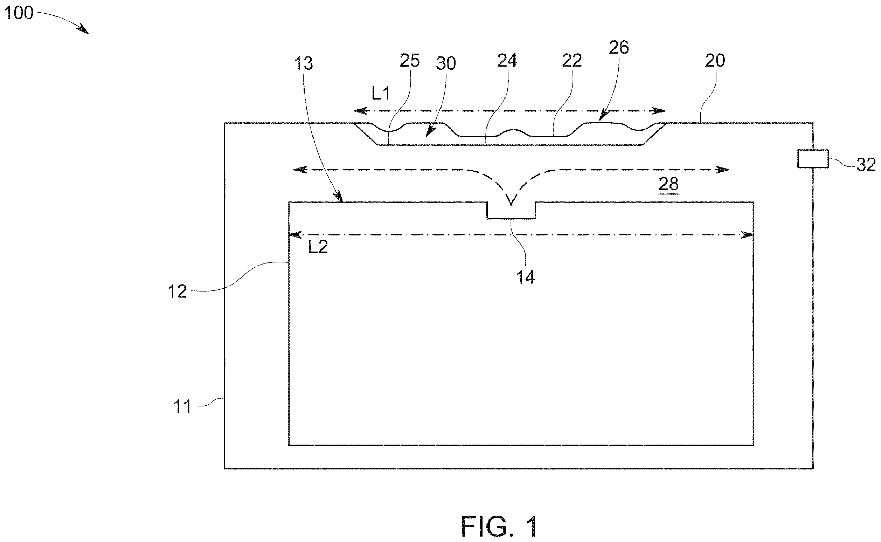

Fig. 1 shows a cross section through a battery system 100 according to a first embodiment of the invention.

The battery system 100 includes a housing 11 and a plurality of battery cells inside the housing 11, wherein only one battery cell 12 is shown here. The battery cell 12 includes a venting side 13 with a venting exit 14 through which, during a thermal runaway event occurring inside the battery cell 12, a venting gas stream may exit the battery cell 12. A housing cover 20 covers the housing 11 thus sealing the battery system 100.

The housing cover 20 includes a double-layer structure with an outer layer 22 and an inner layer 24. The outer layer 22 faces the outside of the battery system 100 and prevents moisture and other contaminants from entering the battery system 100. The outer layer 22 is coated with an anti-corrosion coating 26, for example, a zinc-nickel coating, to prevent corrosion of the outer layer 22 and thus of the housing cover 20 due to contact with the moisture.

The inner layer 24 is made by a steel plate 25 which is attached, e.g., welded, to the outer layer 22. In the following, the terms "inner layer" and "steel plate" are used interchangeably. The inner layer 24 of the housing cover 20 faces the venting side 13 of the battery cell 12 opposite the venting exit 14. The inner layer 24 and the outer layer 22 are distanced from each other such that an air gap 30 is formed as a free space confined between the inner layer 24 and the outer layer 22. Thus, by attaching the steel plate 25 to the outer layer 22 of the housing cover 20 the double-layer structure with the air gap 30 inside is provided opposite the venting exit 14. Between the inner layer 24, i.e. the steel plate 25, and the venting side 13 of the battery cell 12 a venting channel 28 is formed.

When a thermal runaway occurs inside the battery cell 12, a venting gas stream including hot venting gases and particles exits the battery cell 12 through the venting exit 14 into the venting channel 28. The venting gas stream flows towards the steel plate 25 and is deflected by the steel plate 25 to the sides as shown via dashed lines. The venting gas stream may leave the housing 11 through a housing venting valve 32. The venting gas stream thereby transfers heat energy to the steel plate 25 which forms the inner layer 24 of the double-layer structure of the housing cover 20.

The air inside the air gap 30 functions as a thermal insulation preventing or at least significantly reducing heat transfer from the inner layer 24 to the outer layer 22. Thus, the outer layer 22 is protected from the venting gas stream at least where the venting gas stream is still hot. This prevents damage to the anti-corrosion coating 26 applied to the outer surface of the outer layer 22. Thus, the inventive double-layer structure with the air gap improves the life expectancy of the battery system.

The air gap 30 and therefore the inner layer 24 does not need to be provided along the whole length of the battery cell 12 but only near the venting exit 14 where the temperature of the venting gas stream is the highest. After the venting gas stream is cooled down sufficiently by transferring heat inter alia to the steel plate 25, the venting gas stream may be allowed to come in contact with the outer layer 22 of the housing cover 20. Therefore, the air gap 30 may extend along a first length L1 which is less than a second length L2 along which the venting side 13 and thus the battery cell 12 extends as shown in Fig. 1. This may allow for simpler construction.

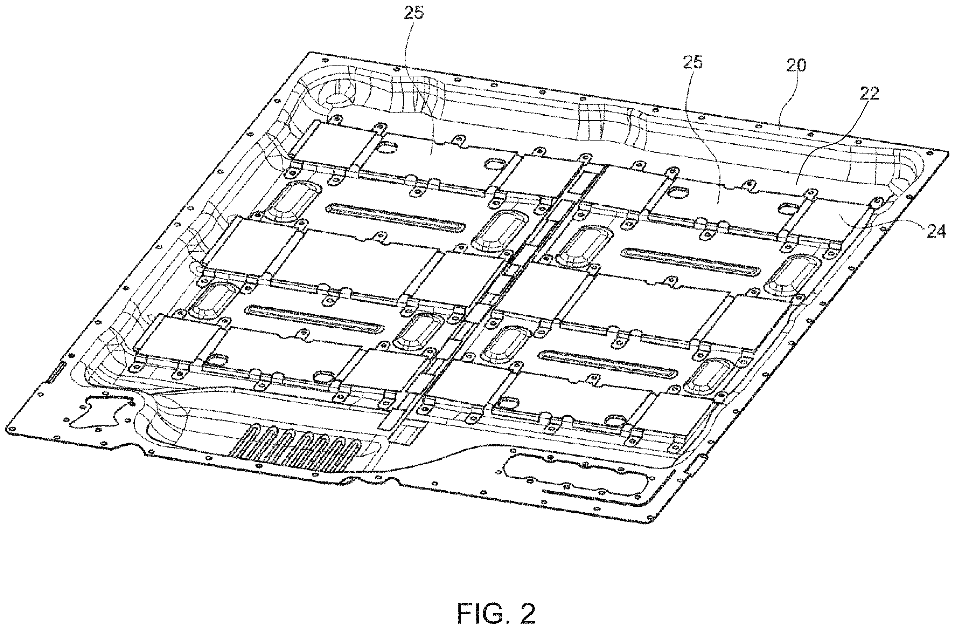

Fig. 2 shows the housing cover 20 from below. As can be seen here, the housing cover 20 includes a plurality of steel plates 25 attached to the outer layer 22. In other words, where the steel plates 25 are attached to the housing cover 20, the housing cover 20 is provided with an outer layer 22 and an inner layer 24, the inner layer 24 being made by the steel plates 25, respectively. Between each of the steel plates 25 and the outer layer 22 a respective air gap 30 is formed. In other words, multiple double-layer structures each including an air gap in between are provided.

When placed on top of a housing 11 as shown in Fig. 1, each of the steel plates 25 may cover one battery cell 12. Thus, each of the battery cells may be provided with the inventive double-layer structure including an air gap, the inner layer 24 forming an upper wall of the respective venting channel 28. The anti-corrosion coating 26 applied to the outer layer 22 is thus sufficiently protected from the venting gas stream. The venting gas stream leaving the burnt-out cell may then enter a common venting gas channel for all of the cells.

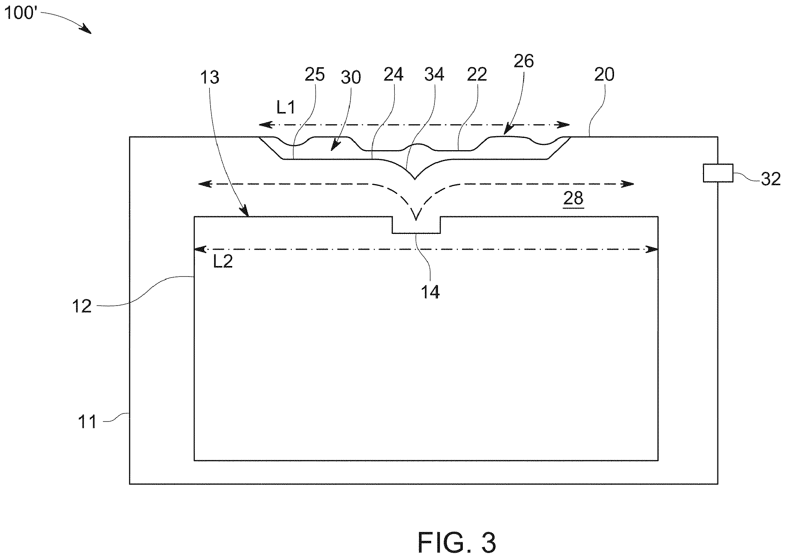

Fig. 3 shows a battery system 100' according to another embodiment. The battery system 100' differs from the above-explained battery system 100 only in that the steel plate 25 and thus the inner layer 24 is provided with a guide projection 34. The guide projection 34 has a tapered shape with a tip facing the venting exit 14 and is adapted to split the venting gas stream such that the venting gas stream is deflected to opposite sides of the venting channel 28 as shown via dashed lines in Fig. 3. This allows for a better heat transfer from the venting gas stream to the steel plate 25 and for an improved transport of the venting gas stream away from the venting exit 14.

### Reference signs

- 11: housing
- 12: battery cell
- 13: venting side
- 14: venting exit
- 20: housing cover
- 22: outer layer of housing cover
- 24: inner layer of housing cover
- 25: steel plate
- 26: anti-corrosion coating
- 28: venting channel
- 30: air gap
- 32: housing venting valve
- 34: guide projection
- 100: battery system
- 100': battery system

## Claims

1. A battery system (100, 100'), comprising:
a housing (11) and at least one battery cell (12) accommodated within the housing (11), wherein the at least one battery cell (12) comprises a venting side (13) with a venting exit (14),
a housing cover (20) sealing the battery system (100),
wherein the housing cover (20) comprises an outer layer (22) and an inner layer (24), the inner layer (24) faces the venting side (13) and forms part of a venting channel (28) guiding a venting gas stream exhausted through the venting exit (14) away from the venting exit (14),
wherein the outer layer (22) is coated on its outside surface with an anti-corrosion coating (26),
wherein the outer layer (22) and the inner layer (24) are distanced from each other such that an air gap (30) is formed as a free space confined between the outer layer (22) and the inner layer (24).

2. The battery system (100, 100') according to claim 1, wherein the inner layer (24) is made by a plate (24) attached to the inside surface of the outer layer (22).

3. The battery system (100, 100') according to claim 1 or 2, wherein the air gap (30) extends along a first length and the venting side (13) along a second length, the first length being smaller than the second length.

4. The battery system (100, 100') according to any one of the preceding claims, wherein the anti-corrosion coating (26) is a zinc-nickel coating.

5. The battery system (100, 100') according to any one of the preceding claims, wherein both the outer layer (22) and the inner layer (24) are of steel or a steel alloy.

6. The battery system (100') according to any one of the preceding claims, wherein the inner layer (24) comprises a guide projection (34) formed as a protrusion in the inner layer (24) and projecting towards the venting exit (14) into the venting channel (28) for guiding the venting gas stream exhausted through the venting exit (14) into the venting channel (28).

7. The battery system (100') according to claim 6, wherein the guide projection (34) is a gas splitting projection having a tapered shape with a tip facing the venting exit (14) and adapted to split the venting gas stream such that the venting gas stream is deflected to opposite sides of the venting channel (24).

8. The battery system (100, 100') according to any one of the preceding claims, wherein the battery system (100, 100') comprises a plurality of battery cells (12) arranged inside the housing (11), wherein the housing cover (20) comprises a plurality of steel plates (25) attached to the inside surface of the outer layer (22) of the housing cover (20), each of the steel plates (25) facing the venting side (13) of one of the battery cells (12), wherein an air gap (30) is formed as a free space confined between each of the steel plates (24) and the outer layer (22) of the housing cover (20).

9. An electric vehicle comprising the battery system (100, 100') according to any one of the preceding claims.
